# EUROPÄISCHE PATENTANMELDUNG

(11) **EP 0 816 294 A2**
(43) Veröffentlichungstag der Anmeldung: **07.01.1998**
(21) Anmeldenummer: 97110102.7
(22) Anmeldetag: 20.06.1997
(51) Int. Cl.: C02F 1/70, G21F 9/12, B01J 41/04, B01J 47/04

(54) **Verfahren zur Zerstörung oxidierender Substanzen in wässrigen Flüssigkeiten**

(30) Priorität: 03.07.1996 DE 19626697
(71) Anmelder: BAYER AG, 51368 Leverkusen (DE)
(72) Erfinder: Pfenning, Dirk-Michael, Dr., 51381 Leverkusen (DE)

(57) **Zusammenfassung**

Es wurde überraschenderweise festgestellt, daß sich die unerwünschten schleimigen Niederschläge auf dem Harzfilter dann nicht bilden, wenn die zur Wasserreinigung eingesetzten Anionenaustauscher mit mindestens einem Metall der Platingruppe dotiert sind.

## Beschreibung

Die Erfindung betrifft ein Verfahren zur Zerstörung oxidierender Substanzen wie Ozon, Wasserstoffperoxid, OH-Radikale und organische Peroxide in wäßrigen Flüssigkeiten durch auf Träger aufgebrachte Metalle der Platingruppe.

Ionenaustauscher haben schon vor geraumer Zeit Einzug in die Technologie der Wasserreinigung gehalten, die insbesondere in der Elektronikindustrie, in der Pharma- und Kosmetikindustrie, in der Getränkeindustrie und in Kraftwerkanlagen besonders hohe Reinheitsanforderungen erfüllen muß. Dabei sind die Ionenaustauscher in der Regel Teil eines komplizierten Reinigungssystems, das u.a. auch die Entkeimung und die Entfernung von Spuren organischer Verbindungen umfaßt, beispielsweise mit Hilfe von Ozon, UV-Strahlen und/oder Konditionierung mittels Wasserstoffperoxid. Im Primärkreislauf von Kernkraftwerken kommt hierzu noch die Entfernung von Radionukliden und deren Folgeprodukten. Von Ionenaustauschern verlangt man, daß sie in derartigen Reinigungssystemen möglichst lange Zeit störungsfrei arbeiten.

Dazu kommt noch der Umstand, daß dem Wasser nicht immer nur Kühlfunktion zukommt. So wird bei Kernkraftwerken oft in Wasser gelöste Borsäure zur Moderation der Kernreaktion eingesetzt (Bor geht bei Neutronenbeschuß in Lithium über). Reinigungsoperationen müssen in solchen Fällen also auch berücksichtigen, daß diese Funktion nicht beeinträchtigt werden darf.

Den Ionenaustauschern - meist einer Kombination von Kationen- und Anionenaustauschern, die oft in einem Mischbettfilter angeordnet sind - wird im allgemeinen ein Harzfänger (= Filter) nachgeschaltet, um ausgewaschenes Feinkorn und Bruchstücke von Harzperlen aufzufangen. Wenn sich ein Harzfänger zusetzt, ist ein erhöhter Druckverlust die Folge. Beim Austausch von Filtern, die Radionuklide enthalten, ist die Entsorgung besonders kostenintensiv; man möchte sie deshalb möglichst selten notwendig werden lassen. Es hat sich nun herausgestellt, daß diese Harzfänger oftmals ausgetauscht werden müssen, weil sich auf ihnen nicht nur bestimmungsgemäß Harzteilchen, sondern auch schleimartige Substanzen niederschlagen, die die Durchgängigkeit des Filters stark herabsetzen.

Wir haben nun überraschenderweise festgestellt, daß sich die unerwünschten schleimigen Niederschläge auf dem Harzfänger dann nicht bilden, wenn die zur Wasserreinigung eingesetzten Anionenaustauscher mit mindestens einem Metall der Platingruppe dotiert sind. Wie der gefundene Effekt zustandekommt, ist noch ungeklärt. Im Augenblick nehmen wir an, daß oxidierend wirkende Substanzen, die zu einem Harzabbau der Ionenaustauscher führen können, in Gegenwart von Platinmetallen zerstört werden, obwohl dem Wasserstrom Reduktionsmittel wie Wasserstoff oder Hydrazin nicht zugesetzt werden müssen. Durch die Zerstörung der oxidierenden Substanzen evtl. entstandener Sauerstoff stört nicht und kann im System verbleiben.

In der Halbleiter- und Pharmazeutikaproduktion werden große Mengen reinsten Wassers benötigt, wobei zur Sterilisation bzw. zur Entfernung unerwünschter Organika entweder oxidierende Substanzen (Ozon, Wasserstoffperoxid, Peroxid abspaltende Agentien) in Kombination mit einer UV-Lampe oder eine starke UV-Quelle meist niedrigerer Wellenlänge ohne Chemikalienzusatz verwendet wird (siehe z.B. K. Marquardt; Rein- und Reinstwasseraufbereitung; expert-Verlag 1994; Kapitel 4; S. 66 bis 111). Ziel dieser Maßnahmen ist es, extrem niedrige Keimzahlen sowie Rest-TOC-Werte (Total Organic Carbon) <1 ppb zu erreichen. Die eingesetzte UV-Oxidation führt zwar einerseits zur Zersetzung der oxidierenden Hiifschemikalien, bildet jedoch ihrerseits OH-Radikale, die eine stark oxidierende Wirkung besitzen und Organika angreifen. Wir haben nun folgendes gefunden: Gelangen derartige Hilfschemikalien oder oxidierende Reaktionsprodukte auf die nachgeschalteten Reinigungssysteme, die normalerweise Ionenaustauscher enthalten, so kommt es zu einer oxidativen Schädigung der Polymere und in der Folge zur unerwünschten Freisetzung organischer Bruchstücke und ionischer Komponenten. Durch den Einsatz metalldotierter Ionenaustauscher nach einer UV-Oxidation mit oder ohne Hilfschemikalien kann eine derartige Verschlechterung der Wasserqualität vermieden werden. (Der metalldotierte Ionenaustauscher wird also vorzugsweise im Wasserstrom nach der UV-Quelle - als sog. "polisher" - eingebaut.) Durch Reduktionsmittel wie Wasserstoff oder Hydrazin lassen sich die durch die katalytische Zersetzung des Peroxids freiwerdenden Sauerstoffspuren ebenfalls entfernen.

Gegenstand der Erfindung ist also ein Verfahren zur Zerstörung oxidierender Substanzen in wäßrigen Flüssigkeitsströmen in An- oder Abwesenheit zugesetzter Reduktionsmittel, dadurch gekennzeichnet, daß in den Flüssigkeitsstrom mindestens ein Platinmetall auf einem als Träger wirkenden Anionenaustauscher eingebracht wird.

Zu den Platinmetallen zählen die Elemente Ruthenium, Rhodium, Palladium, Osmium, Iridium, Platin. Für das erfindungsgemäße Verfahren werden Palladium und Platin bevorzugt.

Die erfindungsgemäß zu verwendenden Anionenaustauscher können schwach und/oder stark basische Gruppen enthalten. Als Basispolymerisat dient ein vernetztes Polymerisat ethylenisch ungesättigter Monomerer. Beispiele ethylenisch einfach ungesättigter Monomerer sind z.B. Styrol, Vinyltoluol, Ethylstyrol, α-Methylstyrol und deren im Kern halogenierte Derivate wie Chlorstyrol; ferner Vinylbenzylchlorid, Acrylsäure, ihre Salze und ihre Ester, besonders der Methyl- und Ethylester, Methacrylsäure, ihre Salze und ihre Ester, besonders der Methylester, ferner die Nitrile und Amide von Acryl- und Methacrylsäure.

Die Polymerisate sind vernetzt - vorzugsweise durch Copolymerisation mit vernetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- und Trivinylbenzole, Divinylethylbenzol, Divinyltoluol, Divinylxylol, Divinylethylbenzol, Divinylnaphthalin, polyfunktionelle Allylaromaten wie Di- und Triallylbenzole, polyfunktionelle Vinyl- und Allylheterocyclen wie Trivinyl- und Triallylcyanurat und -isocyanurat, N,N'-C₁-C₆-Alkylendiacrylamide und -dimethacrylamide wie N,N'-Methylendiacrylamid und -dimethacrylamid, N,N'-Ethylendiacrylamid und -dimethacrylamid, Polyvinyl- und Polyallylether gesättigter C₂-C₂₀-Polyole mit 2 bis 4 OH-Gruppen pro Molekül, wie z.B. Ethylenglykoldivinyl- und -diallylether und Diethylenglykoldivinyl- und -diallylether, Ester ungesättigter C₃-C₁₂-Alkohole oder gesättigter C₂-C₂₀-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische und cycloaliphatische Olefine mit 2 oder 3 isolierten C=C-Doppelbindungen wie Hexadien-1,5, 2,5-Dimethylhexadien- 1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂-Kohlenwasserstoffen mit 2 oder 3 C=C-Doppelbindungen besonders bewährt. Die vernetzenden Monomeren werden im allgemeinen in Mengen von 2 bis 20 Gew.-%, vorzugsweise 2 bis 12 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischung mit Ethylstyrol) eingesetzt werden.

Die vernetzten Polymerisate können auf an sich bekannte Weise zu Anionenaustauschern weiterverarbeitet werden. Die Anionenaustauscher können einerseits durch Chlormethylierung (vgl. US-PS 2 642 417, 2 960 480, 2 597 492, 2 597 493, 3 311 602 und 2 616 877), vorzugsweise mit Chlormethylether, und anschließende Aminierung (vgl. US-PS 2 632 000, 2 616 877, 2 642 417, 2 632 001 und 2 992 544) mit Ammoniak, einem primären Amin wie Methyl- oder Ethylamin, einem sekundären Amin wie Dimethylamin oder einem tertiären Amin wie Trimethylamin oder Dimethylisopropanolamin bei einer Temperatur von in der Regel 25 bis 150°C hergestellt werden.

Andererseits kann man die Anionenaustauscher nach dem Aminomethylierungsverfahren herstellen, wonach man a) die vernetzten Polymerisate mit Phthalimidderivaten umsetzt und b) die resultierenden Imide hydratisiert. Die Amidomethylierung a) kann durch Umsetzung der vernetzten Polymerisate mit N-Chlormethylphthalimid in Gegenwart von Quellungsmitteln für vernetzte Polymerisate und Friedel-Crafts-Katalysatoren erfolgen (DE-AS 1 054 715), wobei das Phthalimid-Derivat in für die gewünschte Substitutionshöhe (0,3 bis 2,0 Substitutionen pro aromatischem Kern) der im vernetzten Polymerisat vorliegenden aromatischen Kerne geeigneten Mengen (oder bis zu 20 %, vorzugsweise bis zu 10 % Überschuß) eingesetzt wird.

Geeignete Quellungsmittel umfassen halogenierte Kohlenwasserstoffe, vorzugsweise chlorierte C₁-C₄-Kohlenwasserstoffe. Das bevorzugteste Quellungsmittel ist 1,2-Dichlorethan.

Bevorzugte Friedel-Crafts-Katalysatoren umfassen beispielsweise AlCl₃, BF₃, FeCl₃, ZnCl₂, TiCl₄, ZrCl₄, SnCl₄, H₃PO₄, HF und HBF₄. Man kann die Katalysatoren in Mengen von 0,01 bis 0,1 Mol pro Mol N-Chlormethylphthalimid einsetzen.

Man kann die Reaktion beispielsweise so durchführen, daß man das vernetzte Polymerisat in eine Lösung von N-Chlormethylphthalimid in einem Quellungsmittel einträgt und die Reaktanden in Gegenwart des Katalysators bei erhöhter Temperatur, in der Regel bei 50 bis 100, vorzugsweise 50 bis 75°C einwirken läßt, bis die Chlorwasserstoff-Entwicklung im wesentlichen beendet ist. Dies ist im allgemeinen nach 2 bis 20 Stunden der Fall. Nach dem Trennen von substituiertem Polymerisat und flüssigem Reaktionsmedium und anorganischen Produkten empfiehlt es sich, das Polymerisat in wäßriger Kochsalzlösung aufzunehmen und Quellungsmittelreste destillativ zu entfernen.

Die Hydrolyse b) des substituierten Polymerisats kann beispielsweise erfolgen, indem man das isolierte Produkt anschließend bei Temperaturen zwischen 100 und 250°C in einem Autoklaven mit ungefähr 5- bis 40 gew.-%iger wäßriger oder alkoholischer Lösung eines Alkalis, wie Natriumhydroxid, Kaliumhydroxid oder mit einer ungefähr 5- bis 50 gew.-%igen wäßrigen Lösung einer Mineralsäure, wie beispielsweise Salzsäure, Bromwasserstoffsäure, Schwefelsäure, verseift. Das Intermediärprodukt kann andererseits auch mit einer 5- bis 50 gew.-%igen wäßrigen oder alkoholischen Lösung von Hydrazinhydrat bei Temperaturen von 50 bis 100°C umgesetzt werden. In bevorzugter Ausführungsform kann die letztgenannte Lösung andere Alkalien, insbesondere kaustische Alkalien, in Mengen von 1 bis 20 Gew.-% enthalten. Das Reaktionsprodukt kann isoliert, mit Wasser gewaschen und anschließend mit einer wäßrigen Lösung von Mineralsäure (vorzugsweise 5 bis 20 gew.-%ig) zur Vervollständigung der Hydrolyse erhitzt werden.

Die erhältlichen Aminoalkylverbindungen können durch Alkylierung abgewandelt werden. Für diesen Zweck dienen bekannte Alkylierungsmittel, wie z.B. Methyl-, Ethyl-, Propylchloride sowie -bromide, Dialkylsulfate, Alkylenoxide, Halogenhydrine, Polyhalogenverbindungen, Epihalohydrine, Ethylenimine.

Die vorgenannte Alkylierung der besagten Aminoderivate kann durch Umsatz derselben mit Alkylierungsmitteln in molaren Mengen bei Temperaturen zwischen 20 und 125°C bewirkt werden. Bei Verwendung von beispielsweise Alkylhalogeniden oder Dialkylsulfaten empfiehlt es sich, die zur Neutralisation der gebildeten Halogenwasserstoffsäuren bzw. Alkylschwefelsäuren erforderliche Menge eines alkalischen Mittels wie Natriumhydroxid, Kalciumcarbonat, Magnesiumoxid usw. zuzusetzen. Je nach Menge des angewandten Alkylierungsmittels werden sekundäre, tertiäre oder quaternäre Aminoderivate oder deren Mischungen erhalten. Ein weiteres übliches Alkylierungsmittel stellt die Mischung von Formaldehyd mit Ameisensäure dar, welche in Form einer wäßrigen Lösung, gegebenenfalls in Gegenwart von Mineralsäuren, angewendet wird. Die Reaktion kann mit diesen Alkylierungsmitteln bei Temperaturen zwischen 50 und 120°C durchgeführt werden. In letzterem Fall werden bei Anwendung eines Überschusses an Alkylierungsmittel tertiäre Aminoderivate als alleinige Reaktionsprodukte erhalten. Die tertiären Aminoderivate können vollständig oder teilweise in quaternäre Derivate übergeführt werden, indem weitere Umsetzung mit Alkylierungsmitteln, wie z.B. Methylchlorid, bei Temperaturen zwischen 10 und 120°C erfolgt.

Die verwendeten Anionenaustauscher können makropöros oder - vorzugsweise - gelförmig sein; bevorzugt sind solche auf Polystyrol-Basis. Stark basische Anionenaustauscher in der OH-Form und schwach basische in der freien Base-Form werden besonders bevorzugt.

Die Dotierung der Anionenaustauscher mit Platinmetall kann beispielsweise so erfolgen, daß das Palladium in geeigneter Salzform von den ionenaustauschaktiven Gruppen aufgenommen und anschließend reduziert wird oder es werden reduzierende Substanzen zuerst aufgebracht und das Palladium aus einer geeigneten Lösung anschließend auf dem Harz ausgefällt. Schließlich kann auch kolloidal verteiltes schon reduziertes Palladium aus einer entsprechenden Lösung bzw. Suspension vorn Harz adsorptiv aufgenommen werden.

Das hier bevorzugte Aufbringverfahren geht von der Salzform des Harzes aus, die zunächst mit einer Palladiumsalzlösung (z.B. Na₂PdCl₄ 2 bis 20 gew.-%ig) behandelt wird, wobei das auf dem Harz befindliche Anion gegen den anionischen Palladiumkomplex ausgetauscht wird. Dabei verteilt sich der Palladiumkomplex vorwiegend im Oberflächenbereich des Harzkorns, so daß vor allem die Bereiche erfaßt werden, die sich durch eine rasche Kinetik auszeichnen.

Die Reduktion des ionogen auf dem Harz gebundenen Palladiums zum metallischen Palladium kann durch die hierfür gebräuchlichen Reduktionsmittel, wie Hydrazin, Hydroxylamin, Wasserstoff, Ascorbinsäure, Formalin, Ameisensäure in stark alkalischer Lösung bei erhöhter Temperatur erfolgen; bevorzugt wird Hydrazin oder Formalin verwendet.

Die Platinmetall-Gehalte der erfindungsgemäß zu verwendenden Ionenaustauscher liegen im allgemeinen im Bereich von 0,3 bis 10, vorzugsweise 0,5 bis 1,2 g pro Liter Anionenaustauscher.

Das erfindungsgemäße Verfahren erlaubt beispielsweise die Reduktion des Wasserstoffperoxid-Gehalts in Wasser mit anfänglich 5 mg/l Wasserstoffperoxid auf Restgehalte unter 0,01 mg/l Wasserstoffperoxid.

Damit wird das schädigende Potential für organische Austauscherpolymere gesenkt, deren Lebensdauer erheblich verbessert und die unerwünschte Abgabe chemischer Substanzen aus den Polymeren verhindert.

Eine nachträgliche Erklärung für den Mechanismus des erfindungsgemäßen Verfahrens können vielleicht folgende Betrachtungen liefern:

In Brennelemente-Lagerbeckenkreisiäufen von Kernkraftwerken mit Druckwasserreaktor wird z.B. als Kühlmittel eine wäßrige Lösung, die hauptsächlich Borsäure enthält (ca. 3000 ppm), verwendet. In diesem sogenannten Primärkühlmittel der Brennelemente-Lagerbecken können durch radiolytische Reaktionen aufgrund der radioaktiven Belastung der Medien oxidierende Komponenten (wie z.B. mehrere ppm H₂O₂) entstehen, welche die typischerweise in den Reinigungssystemen enthaltenen Ionenaustauscher zersetzen. Der daraus resultierende Austrag an Polymermaterial führt einerseits zur Freisetzung unerwünschter ionischer Komponenten, andererseits zur Druckverlusterhöhung bzw. Durchsatzminderung der nachgeschalteten mechanischen Feinstfilter. Insbesondere ist es angebracht, kontinuierlich betriebene Ionenaustauscherreinigungsfilter zum Schutz vor oxidierenden Agentien erfindungsgemäß mit einer Schicht Platinmetall-dotierter Ionenaustauscher zu überschichten, während diskontinuierlich betriebene Filter durch eine homogene Beimischung der katalytisch aktiven Harzkomponente konditioniert werden können. In beiden Fällen kann auch der Ersatz der typischerweise in den verwendeten Reinigungs-Mischbettfiltern (Kombination aus Kat- und Anionenaustauscher) eingesetzten stark basischen Anionenkomponente durch ein entsprechendes metalldotiertes Ionenaustauscherharz mit Doppelfunktion erfolgen. Auch hier können Reduktionsmittel wie Wasserstoff oder Hydrazin zu einer weiteren Qualitätsverbesserung der wäßrigen Phase führen.

Aus der DE-OS 25 24 722 ist die Verwendung Kupfer- oder Cobaltionen enthaltender Polystyrole zur Reduktion von in Wasser gelöstem Sauerstoff bekannt. Das US-Patent 4 789 488 empfiehlt Palladium- oder Platin-dotierte Anionenaustauscher zur Verminderung des Sauerstoffgehalts in wäßrigen Systemen mit Wasserstoff. Neben Wasserstoff hat man auch bereits andere Reduktionsmittel, wie z.B. Hydrazin, zur Entfernung von Sauerstoff aus Wasser beschrieben; vergl. F. Martinola et al., VGB Kraftwerkstechnik 64 (1984), S. 61-63. Auch der Einsatz metalldotierter Anionenaustauscher zur gleichzeitigen Entfernung von Sauerstoff und unerwünschten Ionen ist schon diskutiert worden; vergl. F. Martinola, a. a. O. Daneben ist bereits eine oxidative Schädigung von Ionenaustauschern bei der Konditionierung von Kraftwerk-Wasserkreisläufen durch starke Oxidationsmittel, wie z.B. Wasserstoffperoxid, beobachtet worden; vergl. F. Martinola, VGB Kraftwerkstechnik 58 (1978), S. 1-4.

Die erfindungsgemäß zu verwendenden dotierten Ionenaustauscher können in ihrer Funktion zur Zerstörung oxidierender Substanzen Standzeiten von vielen Monaten erreichen.

### Beispiel

Im Brennelementelagerbeckenkreislauf eines Kernkraftwerkes mit Druckwasserreaktor werden zur Reinigung des Primärkühlmittels (wäßrige Borsäurelösung, 3000 ppm Borat) Ionenaustauscherharze, bestehend aus einer äquimolaren Mischung von gelförmigem stark saurem Kationen- und stark basischem Anionenaustauscher in der jeweils hochregenerierten Form H^{⊕}/OH^{⊖}-Form (0,4 m³ ®Lewatit VP OC 1293, Hersteller: Bayer AG) eingesetzt. Sie dienen zur Entfernung von im Kühlmittel vorhandenen Radionukliden und reduzieren auf diese Weise die Kühlmittelaktivität. Die Standzeit der Ionenaustauscher ist stark abhängig von der Belastung, die von den jeweiligen Betriebsbedingungen abhängt. Der Austausch wird bei ionaler Erschöpfung notwendig (Absinken der Dekontaminationsfaktoren), die typischerweise nach 1 bis 3 Jahren eintritt (bereits sehr viel eher wird jedoch ein Wechsel der den Ionenaustauscherfiltern nachgeschalteten Filterkerzen (1 µm Porenweite) notwendig). Der Kühlmitteldurchsatz durch das Mischbettharz beträgt 18 m³/h. Bei einem Innendurchmesser der Filtersäule von 1,35 m entspricht dies einer linearen Geschwindigkeit von 25,4 m/h und einer spezifischen Belastung von 45 Bettvolumen pro Stunde. Mit dieser Konstellation erreicht man bei einer Kühlmitteltemperatur von 40°C und einem mittleren Wasserstoffperoxidgehalt von 4,5 ppm (gebildet durch radiolytische Zersetzung des Wassers durch die vorhandene Kühlmittelaktivität) bis zu einem sprunghaften Anstieg des Druckverlustes (10 bar) über die Filterkerzen Standzeiten der Kerzen von im Mittel 4 Monaten. Überschichtet man das Mischbettharz mit ca. 30 cm (0,4 m³) eines mit 0,8 g/l Palladium-dotierten, gelförmigen, stark basischen Anionenaustauschers in der OH-Form (Bayer-Katalysator K 7333), verlängert sich die Standzeit der Filterkerzen auf 1 Jahr bei einem Wasserstoffperoxidgehalt nach dem Ionenaustauscherfilter von am Ende ca. 1 ppm.

## Patentansprüche

1. Verfahren zur Zerstörung oxidierender Substanzen in wäßrigen Flüssigkeitsströmen in An- oder Abwesenheit zugesetzter Reduktionsmittel, dadurch gekennzeichnet, daß in den Flüssigkeitsstrom mindestens ein Platinmetall auf einem als Träger wirkenden Anionenaustauscher eingebracht wird.

2. Verfahren nach Anspruch 1, wonach das Platinmetall aus den Metallen Platin und Palladium ausgewählt wird.

3. Verfahren nach Anspruch 1, wonach der Träger ein stark basischer Anionenaustauscher in der OH-Form oder ein schwachbasischer Anionenaustauscher in der freien Base-Form ist.

4. Verfahren nach Anspruch 1, wonach der Träger ein gelförmiger Anionenaustauscher ist.

5. Verfahren nach Anspruch 1, wonach der Träger das Platinmetall in einer Menge von 0,3 bis 10 g pro Liter Anionenaustauscher enthält.

6. Verfahren nach Anspruch 1 in Kühlmedien von Kraftwerken oder in Reinstwasseranlagen.
